# EUROPÄISCHE PATENTANMELDUNG

(11) **EP 1 925 472 A2**
(43) Veröffentlichungstag der Anmeldung: **28.05.2008**
(21) Anmeldenummer: 07021863.1
(22) Anmeldetag: 10.11.2007
(51) Int. Cl.: B60G 21/055

(54) **Stabilisatoranordnung**

(30) Priorität: 25.11.2006 DE 102006055733
(71) Anmelder: ZF Friedrichshafen AG, 88038 Friedrichshafen (DE)
(72) Erfinder: Richter, Frank, 88094 Oberteuringen (DE); Ketteler, Karl-Hermann, Dr., 88677 Markdorf (DE); Münster, Martin, 88046 Friedrichshafen (DE); Thomä, Achim, Dr., 97493 Bergrheinfeld (DE)

(57) **Zusammenfassung**

Stabilisatoranordnung, umfassend einen zweigeteilten Stabilisator mit jeweils einem in Fahrzeuglängsrichtung verlaufenden Lenker, dessen Stabilisatorabschnitte (3a,3b) eine rotatorische Relativbewegung zueinander ausführen, wobei die Stabilisatorabschnitte mit einer verstellbaren Drehmomenterzeugungseinrichtung (15) in Wirkverbindung stehen, die eine derart große Steuerungsdynamik aufweist, so das die Stabilisatoranordnung (1) auch unter Verzicht auf einen Torsionsabschnitt innerhalb der Stabilisatorordnung einem auf die Stabilisatoranordnung einwirkenden Moment ein angepasstes Gegenmoment ausübt.

## Beschreibung

Die Erfindung betrifft eine verstellbare Stabilisatoranordnung gemäß dem Oberbegriff von Patentanspruch 1.

Eine verstellbare Stabilisatoranordnung weist vielfach einen geteilten Stabilisator konventioneller Bauart auf, zwischen dessen Stabilisatorabschnitten ein Schwenkmotor mit elektrischer oder hydraulischer Leistungsversorgung angeordnet ist. Ein hydraulischer Schwenkmotor benötigt im Vergleich zum elektrischen Schwenkmotor einen deutlich kürzeren axialen Bauraum, da man die zur Energieerzeugung und Übertragung notwendigen Komponenten wie Ventile, Speicher oder Pumpe dezentral im Fahrzeug anordnen kann, verbunden mit den Nachteilen des Montageaufwands und des Leckagerisikos.

Moderne Fahrzeuge verfügen zwar über eine Einzelradaufhängung, doch wirkt ein Stabilisator bei Geradeausfahrt dem Grundgedanken dieser Achsbauweise entgegen, indem eine Einfederung eines Rades auf das andere Rad übertragen wird. Bei einer verstellbaren Stabilisatoranordnung kann man die beiden Stabilisatorenden häufig entkoppeln, so dass keine gegenseitige Beeinflussung der Räder auftritt. Sind die beiden Stabilisatorenden jedoch verbunden, dann ist vereinfacht dargestellt als Torsionslänge der Abstand der beiden Räder abzüglich der Schwenkmotorlänge nutzbar, da der Schwenkmotor keine Torsionsfeder darstellt.

Insbesondere bei einem Schwenkmotor in der Bauform eines E-Motors, wie z. B. in der EP 1 030 790 B1 beschrieben ist, mit einer Blockiereinrichtung und einem Getriebe, verbleibt nur eine sehr kurze Torsionslänge.

Die Aufgabe der vorliegenden Erfindung besteht darin, das aus dem Stand der Technik bekannte Problem der nutzbaren Torsionslänge bei einem Stabilisator zu lösen.

Erfindungsgemäß wird die Aufgabe dadurch gelöst, dass die Drehmomenterzeugungseinrichtung eine derart große Steuerungsdynamik aufweist, so dass die Stabilisatoranordnung auch unter Verzicht auf einen Torsionsabschnitt innerhalb der Stabilisatorordnung einem auf die Stabilisatoranordnung einwirkenden Moment ein angepasstes Gegenmoment ausübt.

Der Grundgedanke der Erfindung besteht darin, dass man die Federwirkung der Stabilisatoreinrichtung in die Drehmomenterzeugungseinrichtung verlagert. Man hat sich damit von der Vorstellung gelöst, dass eine Federwirkung ausschließlich von einem mechanischen Element erzeugt werden kann. Bei einer Feder besteht über die Federrate stets der feste funktionale Zusammenhang zwischen Federweg und Federkraft.

Diese Funktion wird durch die Federwirkung innerhalb der Drehmomenterzeugungseinrichtung aufgehoben.

In weiterer vorteilhafter Ausgestaltung ist vorgesehen, dass der Schwenkmotor eine größere Länge aufweist als 1/3 des Abstands zwischen den Lenkern. Je kürzer die Stabilisatorabschnitte ausgeführt sind, umso geringer ist das Trägheitsverhalten der gesamten Stabilisatoranordnung.

Gemäß einem vorteilhaften Unteranspruch ist die Drehmomenterzeugungseinrichtung als Schwenkmotor ausgeführt.

Eine besonders große Steuerungsdynamik der Stabilisatoranordnung kann dadurch erreicht, dass der Schwenkmotor als Elektromotor ausgeführt ist. Elastizitäten, wie z. B. sich unter Druck verformende Hydraulikleitungen, interne Leckagen o. ä. treten nicht auf.

Eine Sensorik erfasst die Bewegung eines Fahrzeugaufbaus zu einer Radbewegung.

Um nicht für jedes Fahrzeugrad einen separaten Sensor verwenden zu müssen, ist vorgesehen, dass ein Sensor die Verdrehbewegung zwischen den beiden Stabilisatorabschnitten erfasst. Dabei werden Verdrehwinkel und Verdrehgeschwindigkeit gemessen. Aufgrund der minimierten Torsionslage zwischen Rad und Anbindung des Stabilisatorabschnitts im Schwenkmotor steht ein ausreichend genaues Signal zu Verfügung.

Des Weiteren ist vorgesehen, dass die Stabilisatoranordnung eine Torsionseigenfrequenz >30Hz aufweist. Die Torsionseigenfrequenz wird von der Federrate der Stabilisatorabschnitte bestimmt. Je höher die Torsionseigenfrequenz ausgeführt ist, umso dynamischer kann die Stabilisatoranordnung der Anregungsfrequenz der Straßenoberfläche folgen.

Eine weitere sinnvolle Nutzung der Erfindung besteht darin, dass der Schwenkmotor bei einem einwirkenden Moment als Generator betrieben werden kann.

Anhand der folgenden Figurenbeschreibung soll die Erfindung näher erläutert werden. Es zeigt:
- Fig. 1: Prinzipdarstellung einer Fahrzeugachse mit einer erfindungsgemäßen Stabilisatoranordnung
- Fig. 2: Drehmomenterzeugungseinrichtung der Fig. 1 in Schnittdarstellung

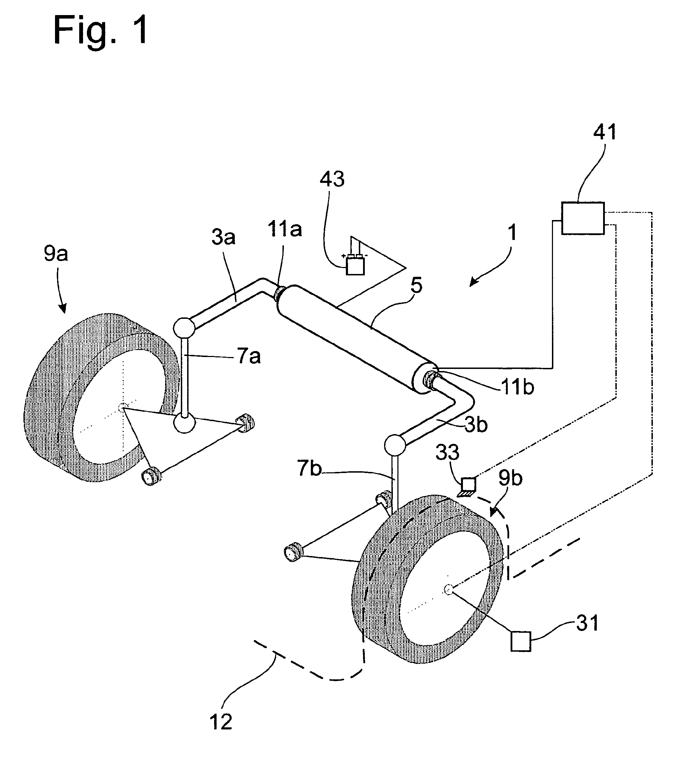

Die Figur 1 zeigt ein Prinzipschaubild einer Stabilisatoranordnung 1, die einen zweigeteilten Stabilisator mit Stabilisatorabschnitten 3a; 3b und einem zwischen den beiden Stabilisatorabschnitten angeordnetes Gehäuse 5 umfasst. Jeweils ein Stabilisatorabschnitt 3a; 3b ist über eine Pendelstütze 7a; 7b mit einem Fahrzeugrad 9a; 9b verbunden. Zwei Stabilisatorlager 11 a; 11 b verbinden die Stabilisatoranordnung mit einem Fahrzeugaufbau 12. Bei einer Ein- oder Ausfederungsbewegung eines der Fahrzeugräder 9a; 9b wird der entsprechende Stabilisatorabschnitt 3a; 3b in Abhängigkeit der Längenverhältnisse auf Biegung und/oder Torsion beansprucht.

In dieser beispielhaften Ausführung sind die Stabilisatorlager 11 a; 11 b unmittelbar auf dem Gehäuse 5 angeordnet, so dass die wirksame Torsionslänge der Stabilisatorabschnitte vergleichsweise knapp bemessen ist.

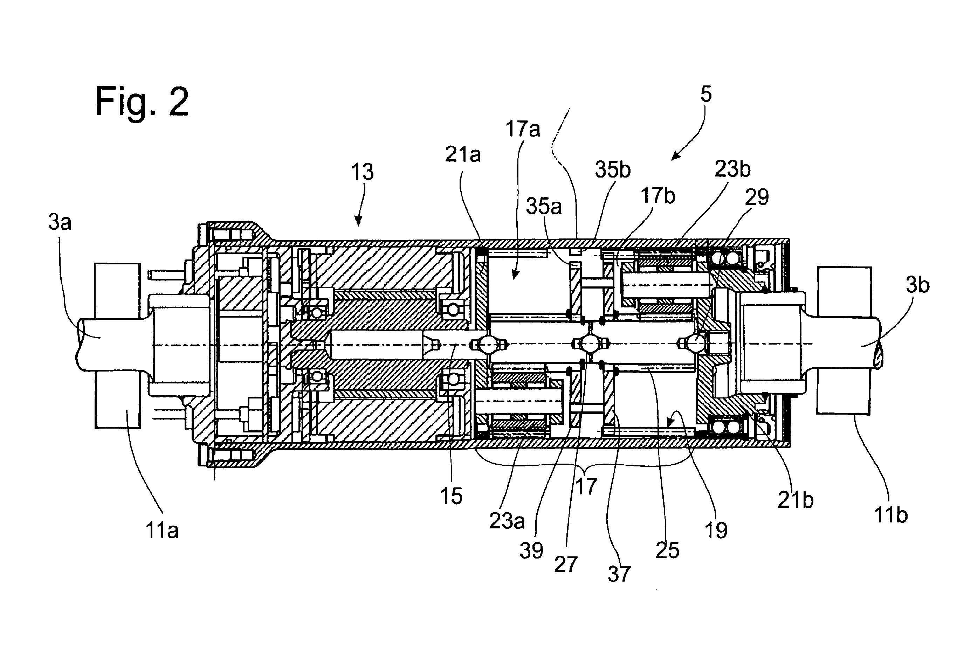

Die Figur 2 beschränkt sich auf einen Längsschnitt durch das Gehäuse 5. In dem Gehäuse 5 ist ein als hydraulischer, pneumatischer oder elektrischer Schwenkmotor 13 zur Verstellung der Stabilisatoranordnung ausgeführt. In diesem Fall liegt ein Elektromotor mit einer Rotorwelle 15 vor. Der Stabilisatorabschnitt 3a ist fest mit dem Gehäuse 5 des Schwenkmotors verbunden. Zwischen der Rotorwelle 15 und dem Stabilisatorabschnitt 3b ist ein zweistufiges Getriebe angeordnet, in diesem Fall einem Planetengetriebe 17. Die Gehäuseinnenwandung bildet ein Hohlrad 19. Getriebeeingangsseitig greift der Stabilisatorabschnitt 3b an einem Planetenradträger 21 b an, dessen Planetenräder 23b wiederum mit einem Sonnenrad 25 als Getriebeausgang im Eingriff stehen. Das Sonnenrad 25 wird von einer Zwischenwelle zwischen der Rotorwelle 15 und dem Planetenradträger 21 gebildet, wobei sich alle drei genannten Bauteil durch Lager 27; 29 relativ in Umfangsrichtung zueinander bewegen können. Eine weitere Getriebestufe 17a mit einem Planetenradträger 21 a und Planetenrädern 23a steht mit der Rotorwelle 15 im Eingriff.

Wenn der Schwenkmotor von der Energiezufuhr abgeschaltet ist, dann können sich die Stabilisatorenden abgesehen von Reibungskräften, z. B. in den Lagerstellen und im Getriebe 17, unabhängig voneinander bewegen. Bei einer Bestromung erzeugt der Elektromotor ein angepasstes Gegendrehmoment auf das einwirkende Moment aufgrund einer Anregung einer Fahrbahnoberfläche oder einer Rollbewegung des Fahrzeugaufbaus. Die Größe des Gegenmoments und der zulässige Verdrehwinkel der Stabilisatorabschnitte werden aufgrund von Signalen berechnet, die von einer Sensorik zur Erfassung der Bewegung des Fahrzeugaufbaus zu einer Radbewegung bereitgestellt werden. Die Sensorik kann z. B. Radsensoren 31 und der Fahrzeugaufbausensor 33, aber auch einen Sensor 35a; 35b innerhalb des Schwenkmotors umfassen, der die Verdrehgeschwindigkeit und richtungsabhängig den Verdrehwinkel zwischen den Stabilisatorabschnitten 3a: 3b erfasst. Der Sensor kann z. B. zwischen der Innenwandung des Gehäuses und je einem der Übertragungszahnrad 37; 39 zwischen den beiden Getriebestufen angeordnet sein. Die Signale der Sensorik 31 oder 35a: 35b und 33 werden an eine Rechnereinheit 41 weitergeleitet, die aus den Signalen die notwendige Stellleistung des Schwenkmotors bestimmt

Die Steuerungsdynamik der Stabilisatoranordnung ist derart groß, dass auch unter Verzicht auf einen Torsionsabschnitt innerhalb der Stabilisatoranordnung ein angepasstes Gegenmoment erzeugt werden kann. Die Stabilisatoranordnung weist eine Torsionseigenfrequenz von > 30Hz auf, so dass die Stabilisatoranordnung sehr direkt einer Straßenanregung nachfolgen kann. Optional kann der elektrische Schwenkmotor durch die Ausnutzung der Anregungen durch die Fahrbahnoberfläche oder der Rollbewegung des Fahrzeugaufbaus auch als Generator verwendet werden, wobei eine Batterie 43 als Speicher dient.

## Patentansprüche

1. Stabilisatoranordnung, umfassend einen zweigeteilten Stabilisator mit jeweils einem in Fahrzeuglängsrichtung verlaufenden Lenker, dessen Stabilisatorabschnitte eine rotatorische Relativbewegung zueinander ausführen, wobei die Stabilisatorabschnitte mit einer verstellbaren Drehmomenterzeugungseinrichtung in Wirkverbindung stehen,
**dadurch gekennzeichnet,**
**dass** die Drehmomenterzeugungseinrichtung (15) eine derart große Steuerungsdynamik aufweist, so das die Stabilisatoranordnung (1) auch unter Verzicht auf einen Torsionsabschnitt innerhalb der Stabilisatorordnung einem auf die Stabilisatoranordnung einwirkenden Moment ein angepasstes Gegenmoment ausübt.

2. Stabilisatoranordnung nach Anspruch 1,
**dadurch gekennzeichnet,**
**dass** der Schwenkmotor (15) eine größere Länge aufweist als 1 /3 des Abstands zwischen den Lenkern.

3. Stabilisatoranordnung nach Anspruch 1,
**dadurch gekennzeichnet,**
**dass** die Drehmomenterzeugungseinrichtung (15) als Schwenkmotor ausgeführt ist.

4. Stabilisatoranordnung nach Anspruch 3,
**dadurch gekennzeichnet,**
**dass** der Schwenkmotor (15) als Elektromotor ausgeführt ist.

5. Stabilisatoranordnung nach Anspruch 1,
**dadurch gekennzeichnet,**
**dass** eine Sensorik (31; 33; 35a; 35b) die Bewegung eines Fahrzeugaufbaus (12) zu einer Radbewegung erfasst.

6. Stabilisatoranordnung nach Anspruch 5,
**dadurch gekennzeichnet,**
**dass** ein Sensor (35a; 35b) die Verdrehbewegung zwischen den beiden Stabilisatorabschnitten (3a; 3b) erfasst.

7. Stabilisatoranordnung nach Anspruch 1,
**dadurch gekennzeichnet,**
**dass** die Stabilisatoranordnung (1) eine Torsionseigenfrequenz >30Hz aufweist.

8. Stabilisatoranordnung nach Anspruch 1,
**dadurch gekennzeichnet,**
**dass** der Schwenkmotor (15) bei einem einwirkenden Moment als Generator betrieben werden kann.
